# EUROPÄISCHE PATENTANMELDUNG

(11) **EP 4 516 734 A1**
(43) Veröffentlichungstag der Anmeldung: **05.03.2025**
(21) Anmeldenummer: 24194127.7
(22) Anmeldetag: 12.08.2024
(51) Int. Cl.: C01B 25/01, C01B 25/02, C02F 11/00, C22B 1/08, C01B 33/107, C01B 25/10, C02F 11/06, C02F 11/143, C02F 101/10, C02F 101/20

(54) **RÜCKGEWINNUNG VON SILIZIUM IN FORM DES TETRACHLORIDES AUS BIOKOHLE**

(30) Priorität: 30.08.2023 EP 23194301
(71) Anmelder: LANXESS Deutschland GmbH, 50569 Köln (DE)
(72) Erfinder: BOLL, Matthias, 51061 Köln (DE)

(57) **Zusammenfassung**

Die Erfindung betrifft ein Verfahren zur Rückgewinnung von Silizium in Form des Tetrachlorides, in dem man Biokohle mit einem Siliziumgehalt, ausgedrückt in Gew.-% an elementarem Silizium, von wenigstens 1 Gew.-% mit elementarem Chlor bei einer Temperatur von 350 bis 900°C umsetzt und das gebildete Siliziumtetrachlorid aus dem Abgasstrom, vorzugsweise durch Kondensation abtrennt.

## Beschreibung

Die vorliegende Erfindung betrifft die Rückgewinnung von Silizium in Form des Tetrachlorides aus Biokohle.

Der Wunsch zur Rückgewinnung von Rohstoffen aus Biomassen, wie beispielsweise Klärschlamm aus Kläranlagen, aber auch Tierdung sowie Pflanzenresten, ist in den letzten Jahren vor allem aus ökologischen und politischen Gründen gewachsen. Dazu kommt, dass die Ausbringungen auf Felder als Dünger oft wegen hoher Schwermetallgehalte und dem möglichen Vorhandensein von Krankheitserregern und Keimen immer weiter eingeschränkt wurde. Biomassen aus der Landwirtschaft, wie zum Beispiel Tierdung, insbesondere Kuh- oder Hühnermist sowie Gülle dürfen zwar weiterhin auf die Felder gebracht werden, durch die Ausbringung werden aber die Nitratwerte im Grundwasser erhöht und übersteigen lokal häufig zulässige Grenzwerte. Das effektive und kostengünstige Herausfiltern von Nitrat aus Grundwasser ist technisch noch ungelöst.

Eine alternative Verwendung von Biomassen am Beispiel von Klärschlamm aus Kläranlagen ist, dass dieser üblicherweise mechanisch teilentwässert und/oder auch thermisch vorgetrocknet wird und in Verbrennungsanlagen, gegebenenfalls zusammen mit Hausmüll oder Industrieabfällen verbrannt wird. Die entstehende Asche ist ein hauptsächlich anorganischer Rückstand, der verschiedene Verbindungen von Elementen wie Phosphor (P), Eisen (Fe), Aluminium (Al), Kalzium (Ca) und Silizium (Si) enthält. Die Entsorgung dieser Asche durch Ausbringung in die Umwelt ohne weitere Behandlung kann zu einer ernsthaften Umweltverschmutzung führen, hauptsächlich aufgrund des Vorhandenseins von Schwermetallen und anderen giftigen Substanzen.

Die Verbrennung des Klärschlammes in Vorbereitung zur Rückgewinnung wesentlicher Wertstoffe stellt einen Prozessschritt dar, der allerdings ohne Wertschöpfung ist. Er dient lediglich dazu, die Abfallmenge zu verkleinern. Entstehende Wärme durch die Verbrennung wird in der Regel vollumfänglich zur Vortrocknung von neuem Klärschlamm verwendet.

Angesichts dieser Probleme ist es notwendig geworden, Verfahren zur Behandlung von Biomassen, insbesondere Klärschlamm, zu entwickeln, mit dem Ziel, die darin enthaltenen, verwertbaren Elemente in Form ihrer verschiedenen Verbindungen zurückzugewinnen und für verschiedene Anwendungen wiederzuverwenden.

Tatsächlich gibt es im Stand der Technik verschiedene Versuche und Methoden, Biomassen wie Klärschlamm als Quelle für wertvolle Rohstoffe zu nutzen.

Der Rückgewinnung von Wertstoffen aus solchen Biomassen, beispielsweise aus Klärschlamm, kommt eine zunehmende Bedeutung zu, was insbesondere die Verwertung von Phosphor und Silizium betrifft, für die weltweit ein hoher Bedarf besteht.

Je nach Betriebsweise einer Kläranlage liegt die Konzentration im Klärschlamm bei einem üblichen Feststoffgehalt von etwa 30 Gew.-%, an Silizium üblicherweise bei ca. 1 bis 12 Gew.-% und an Phosphor bei ca. 1,5 bis 15 Gew.-%, jeweils ausgedrückt in elementarer Form. Bislang wurde die Rückgewinnung von den in der Biomasse enthaltenden Wertstoffen üblicherweise für Phosphorverbindungen beschrieben.

Im Falle von Klärschlamm gibt es in der Technik zwar verschiedene, nasschemische Ansätze zur Rückgewinnung von Phosphor in Form des Phosphates, jedoch nicht zur Rückgewinnung von Silizium in Form des Siliziumtetrachlorid.

Siliziumtetrachlorid kann und wird auch aktuell bevorzugt aus den Elementen hergestellt, aber auch aus einem Gemisch aus Sand und Kohle mit Chlor. In US4604272 wird Kieselgur mit hoher BET-Oberfläche, mit Chlor, allerdings nur unter Zugabe von speziellen Chloriden wie beispielweise Nickelchlorid (siehe Beispiel 1) und in Gegenwart von speziellen Kohlesorten mit hoher BET-Oberfläche, bereits bei Temperaturen von 500°C zu Siliziumtetrachlorid umgesetzt. Üblicher Strandsand mit kleinerer Oberfläche reagiert unter diesen Bedingungen allerdings nicht unter 1290°C zu Siliziumtetrachlorid (siehe Vergleichsbeispiel 1).

Neben SiOz dient auch SiC als Ausgangsmaterial zur Herstellung von Siliziumtetrachlorid. Hier wird bei Temperaturen von 1000°C bis 1600°C gearbeitet, wie in US2843458 beschrieben.

In Beispiel 10 von EP0034897 wird, aus einem aus Silikatgestein und Na₂CO₃ durch Aufschmelzen hergestelltes Alkalisilikat bei 700°C in Gegenwart von Aktivkohle in einem Chlorgasstrom umgesetzt und Siliziumtetrachlorid in einer Ausbeute von 28%, bezogen auf das eingesetzte Silizium, erhalten. Der Einsatz von pulverisiertem Silicat mit Aktivkohle ohne die Vorbehandlung mit einer Na₂CO₃ Schmelze führte bei 700°C dagegen nur zu Spuren an Siliziumtetrachlorid im Abgasstrom (siehe Vergleichsbeispiel 6).

Auch Verfahren zur Rückgewinnung von Phosphor aus Klärschlamm sind bekannt.

So wird in der EP3984966A1 ein Verfahren zur Gewinnung von Phosphor in Form von Struvit aus in Kläranlagen anfallendem Rohschlamm durch einen Hydrolyseschritt beschrieben.

Auch in EP2176177B1 wird durch ein Fällungsverfahren das Phosphat aus Biomassen wiedergewonnen. In EP3061725B1 wird ein Verfahren zur Rückgewinnung von Phosphor aus einer Biomasse durch hydrothermale Karbonisierung beschrieben und dann durch Absenkung des pH-Wertes eine Freisetzung des Phosphors als Phosphat erreicht.

All diese Verfahren haben gemeinsam, dass sie Säure einsetzen, was durch die darauffolgende Neutralisation zwangsläufig zur Bildung großer Mengen an Neutralsalzen führt. Der Aufarbeitungsprozess ist in der Regel umständlich und die Kosten entsprechend hoch. Dadurch, dass wässrige Suspensionen verarbeitet werden, sind die Energiekosten für das Rühren oder Umpumpen sehr hoch. Alle Verfahren führen zudem nur zu einem Phosphat, das zwar in der Landwirtschaft eingesetzt werden kann, aber nicht zu höherwertigen Produkten wie Phosphor-Chlor-Verbindungen als Rohstoff für die Chemische Industrie.

Die Verwertung von Biomassen wie Pflanzenresten erfolgt in der Regel über Trocknung und trockene Pyrolyse hin zur sogenannten Biokohle. Solche Verfahren sind zum Beispiel in EP3919586 beschrieben und ergeben ein Produkt wie zum Beispiel in WO2023/275271 erläutert. Die Pflanzenreste enthalten neben Phosphor immer auch beträchtliche Mengen Silizium. In der Asche sind das etwa 16 bis 26% gerechnet als SiOz, 8 bis 13 Gew.-% gerechnet als elementares Si (siehe zum Beispiel "Österreichisches Bundesministerium für Land- und Forstwirtschaft, Umwelt und Wasserwirtschaft, BIOMASSE-ASCHENSTRÖME IN ÖSTER-REICH, Birgit Walter, Peter Mostbauer, Brigitte Karigl, REPORT REP-0561 Wien, 2016", Tabelle 21).

Die Pyrolyse von Pflanzenresten wird üblicherweise durchgeführt, um den darin enthaltenen Kohlenstoff zu binden und die Entstehung von Kohlendioxid durch Verrotten zu verhindern. Die Produkte werden in der Regel als sogenannte Pflanzenkohle auf Felder ausgebracht.

Die Bildung und Abtrennung von flüchtigen Silizium-Chlorverbindungen aus Biomassen wie Klärschlamm (mit unterschiedlichem Wassergehalt) oder Pflanzenresten oder Tierdung, oder einer daraus gewonnenen Biokohle wird in der Literatur nicht erwähnt und kann unter den in der Literatur genannten nasschemischen Bedingungen wissenschaftlich nicht erwartet werden.

Während Phosphor-Chlorverbindungen zur Herstellung von zum Beispiel Flammschutzmitteln oder hochreiner Phosphorsäure eingesetzt werden kann, kann hochreines SiCl₄ zur Herstellung von sehr sauberem SiOz oder "fumed silica" für die Herstellung von Glasfaserleitungen oder von polykristallinem Silizium für die Halbleiterindustrie eingesetzt werden.

Gesucht wird daher ein Verfahren, bei dem auf die umständliche und teure Verbrennung von Biomassen, wie Klärschlamm, zur Vorbereitung einer weiteren Aufarbeitung verzichtet werden kann und stattdessen die relevanten Wertstoffe wie Silizium, Phosphor sowie Eisen und Aluminium direkt daraus gewonnen werden können.

Aufgabe der Erfindung ist daher, Siliziumverbindungen sowie vorzugsweise Phosphorverbindungen in Form ihrer Chlorverbindungen ausgehend von einer Biomassenbasis herzustellen.

### Lösung der Aufgabe

Die Erfindung betrifft nun ein Verfahren zur Rückgewinnung von Silizium in Form des Tetrachlorides, in dem man Biokohle mit einem Siliziumgehalt, ausgedrückt in Gew.-% an elementarem Silizium, von wenigstens 1 Gew.-%, insbesondere wenigstens 5 Gew.-%, vorzugsweise von 5 bis 40 Gew.-%, besonders bevorzugt von 7 bis 30 Gew.-%, mit elementarem Chlor bei einer Temperatur von 350 bis 900°C, vorzugsweise von 400 bis 850°C, besonders bevorzugt von 500°C bis 800°C umsetzt und das gebildete Siliziumtetrachlorid aus dem Abgasstrom, vorzugsweise durch Kondensation, abtrennt.

### "Biokohle"

Unter Biokohle, die im Englischen beispielsweise aus der EP3285920A1 auch als "Biochar" bezeichnet wird, wird das Pyrolyseprodukt einer Biomasse, genauer gesagt der vorzugsweise feste Pyrolyserückstand einer Biomasse verstanden, wobei es sich im Fall der vorliegenden Erfindung um den Pyrolyserückstand einer siliziumhaltige Biomasse handelt.

Eine bevorzugt eingesetzte Biokohle hat einen Si-Anteil, bestimmt als elementares Silizium, von wenigstens 5 Gew.-%, vorzugsweise von 5 bis 40 Gew.-%, besonders bevorzugt von 7 bis 30 Gew.-%. Als bevorzugte weitere anorganische Bestandteile, jeweils als Elemente beschrieben, können enthalten sein:
Phosphor von 2 bis 19 Gew.-%, und insbesondere
Eisen von 3 bis 14 Gew.-%,
Calcium von 2 bis 35 Gew.-%,
Aluminium von 0,4 bis 13 Gew.-%,
Kalium von 0 bis 7 Gew.-%,
Magnesium von 0,1 bis 3 Gew.-%,
Natrium von 0,1 bis 3 Gew.-%
Schwefel von 0 bis 7 Gew.-%,
Kohlenstoff 3 bis 45 Gew.-%
   und
Titan von 0 bis 2 Gew.-%.

Eine bevorzugt eingesetzte Biokohle enthält neben dem beschrieben Anteil an Si-Verbindungen gerechnet als Si-Element auch Phosphor von 2 bis 19 Gew.-%, insbesondere von 5 bis 16 Gew.-% und vorzugsweise auch Eisen von 3 bis 14 Gew.-% und Aluminium von 0,4 bis 13 Gew.-%, jeweils als Elemente beschrieben.

Bevorzugt enthält die im erfindungsgemäßen Verfahren eingesetzte Biokohle einen Kohlenstoffgehalt von größer 20 Gew.-%. Sofern sie einen geringeren Kohlenstoffgehalt von 20 oder weniger Gew.-% haben sollte, kann der Gehalt durch Zusatz einer weiteren Kohlenstoffquelle erhöht werden.

Während SiOz Verbindungen in Form von Kieselgur den stärksten Reflex bei der Röntgenbeugung bei einem 2θ-Wert (λ(K_{α}) =1,540 Å) bei 21.9° besitzen (siehe Journal of Inorganic and Organometallic Polymers and Materials (2022) 32:2455-2472), weist Biokohle üblicherweise den stärksten Reflex bei einem 2θ-Wert (λ(Kα) =1,540 Å) bei 26,3° auf.

Die Biokohle kann so eingesetzt werden, wie sie aus der Pyrolyse anfällt oder aber einer Formgebung unterworfen werden. Dies kann beispielsweise durch Extrusion, Tablettierung, Pelletierung, Granulierung oder Brikettierung erfolgen. Gegebenenfalls kann der Biokohle für die Formgebung vorher ein Binder und gegebenenfalls auch Wasser zugesetzt werden.

Besonders bevorzugt kann eine Formgebung auch schon auf der Ebene der vorhergehenden, für die Pyrolyse eingesetzten, Biomasse erfolgen, die nach der Pyrolyse weitgehend erhalten bleibt.

Die Formgebung der Biokohle ist optional.

### Pyrolyse

Bevorzugt ist es, in dem erfindungsgemäßen Verfahren eine Biokohle einzusetzen, die als Pyrolyserückstand einer Biomasse durch Erhitzen der Biomasse, insbesondere eines Klärschlamms, vorzugsweise mit einem Wassergehalt von kleiner 15 Gew.-%, insbesondere von kleiner 12 Gew.-%, bevorzugt < 8 Gew.-%, besonders bevorzugt von 0,5 bis 7 Gew.-% in einer sauerstoffarmen Atmosphäre bei Temperaturen von 250 bis 800°C erhalten wurde. Bei dieser Pyrolyse zersetzen sich organische Substanzen, flüchtige Verbindungen entstehen und Kohlenstoff zusammen mit anderen Feststoffen bleiben als Biokohle zurück.

Eine Vortrocknung der in der Pyrolyse eingesetzten Biomasse auf einen bestimmten Wassergehalt ist optional. Allerdings kann ein vorgetrocknetes Material einfacher einer Formgebung unterzogen werden. Dieser Schritt ist optional.

In einer alternativen Ausführungsform wird Biomasse und ggf. eine oder mehrere Kohlenstoffquellen gemischt, ggf. mit einem Bindemittel und Lösemittel wie Wasser zu Formkörpern geformt und getrocknet. Sollte der Kohlenstoffanteil in der Kohlenstoffquelle bei kleiner als 70 Gew.-% liegen, wird vorzugsweise vor der Vermischung mit Klärschlamm oder Klärschlammkohle eine Pyrolyse durchgeführt.

In einer besonderen Ausführungsform kann die Trocknung und die Pyrolyse auch kombiniert werden, beispielsweise indem eine Biomasse mit einem Wassergehalt von vorzugsweise >15 Gew.-%, insbesondere >12 Gew.-% unter ansonst identischen Bedingungen eingesetzt wird.

Unter sauerstoffarmer Atmosphäre wird vorzugsweise eine Umsetzung verstanden, bei der der Sauerstoffgehalt bevorzugt weniger als 0,5 Volumenprozent, insbesondere weniger als 0,3 Volumenprozent der Atmosphäre beträgt.

Besonders bevorzugt wird die Pyrolyse unter Inertgas wie Stickstoff durchgeführt. Bevorzugt erfolgt die Pyrolyse bei Temperaturen von 350 bis 550°C. Die Pyrolyse wird insbesondere solange durchgeführt, bis die Gasbildung von flüchtigen Komponenten weniger als 1l Gas /1kg eingesetzter Biomasse pro Stunde beträgt.

Die so erhaltene Biokohle besitzt bevorzugt einen Kohlenstoffanteil von 3 bis 45 Gew.-%.

Sollte der Kohlenstoffgehalt nach der Pyrolyse größer als 20 Gew.-% sein, kann die erhaltene Biokohle vorzugsweise durch Zumischung von Klärschlammasche oder anderen, siliziumhaltigen Bioaschen von Biomassen mit geringerem Kohlenstoffgehalt verdünnt werden, wodurch die Effizienz des Verfahrens verbessert wird.

Eine "Bioasche" bedeutet im Rahmen dieser Erfindung der Verbrennungsrückstand einer Biomasse oder Biokohle, vorzugsweise mit einem Kohlenstoffgehalt von bevorzugt unter 3 Gew.-%, insbesondere unter 1 Gew.-%, besonders bevorzugt von unter 0,1 Gew.-%.

### Biomasse

Die bevorzugt für die Pyrolyse eingesetzte Biomasse hat einen Wassergehalt von weniger als 15 Gew.-%, insbesondere weniger als 12 Gew.-%, besonders bevorzugt von unter 8 Gew.-%, ganz besonders bevorzugt von unter 4 Gew.-%, der vorzugsweise dadurch erhalten wird, dass man eine Biomasse mit einem Wassergehalt von 12 Gew.-% oder mehr, insbesondere von 15 Gew.-% oder mehr thermisch trocknet. Die Formgebung der Biomasse kann durch Extrusion, Tablettierung, Pelletierung, Granulierung oder Brikettierung erfolgen. Gegebenenfalls kann der Biomasse vorher ein Binder und gegebenenfalls auch Wasser zugesetzt werden.

Die Formgebung der Biomasse ist optional.

Die nach dem erfindungsgemäßen Verfahren eingesetzte Biokohle ist vorzugsweise der Pyrolyserückstand einer Biomasse, vorzugsweise Klärschlamm, Tierdung, auch in Mischung mit Einstreu, Mikroalgen, Wasserpflanzen, Holzschnitzel, Holzabfälle, Agrarabfälle, Stroh, Pflanzen, Früchte und dergleichen. Biomassen haben üblicherweise einen Si-Gehalt der zu einem Pyrolyserückstand, der Biokohle, mit einem Si-Gehalt von wenigstens 1 Gew.-% führt.

In einer bevorzugten Ausführungsform ist die Flüssigkeit, in der die Partikel des Klärschlamms suspendiert sind, Abwasser, worunter bevorzugt alle Flüssigkeiten wässriger und/oder organischer Natur bzw. deren Gemische verstanden werden, die vorzugsweise keine Trinkwasserqualität im Sinne der Trinkwassernormen haben.

Vorzugsweise enthält die Biomasse, bezogen auf ihr Trockengewicht, einen Si-Gehalt von wenigstens 0,1 Gew.-%, insbesondere von 0,2 bis 20 Gew.-%, vorzugsweise von 0,2 bis 10 Gew.-%. Als bevorzugte Biomasse wird für die Pyrolyse Klärschlamm, allein oder mit anderen Biomassen, verwendet.

Vorzugsweise enthält die Biomasse, aus der die im erfindungsgemäßen Verfahren eingesetzte Biokohle erhalten wird, einen Kohlenstoffgehalt, ausgedrückt in Gew.-% an elementarem Kohlenstoff, von wenigstens 1 Gew.-%, bevorzugt wenigstens 15 Gew.-%, insbesondere 15 - 50 Gew.% Kohlenstoff, bezogen auf das Trockengewicht.

In einer besonderen Ausführungsform wird die Biomasse als sogenannter Primärschlamm, Rohschlamm, Überschussschlamm, als behandelter und/oder stabilisierter Klärschlamm (aerob/anaerob) oder getrockneter Klärschlamm, auch zum Beispiel zu Pellets geformt, eingesetzt, wie er bevorzugt in kommunalen Kläranlagen anfällt.

Bevorzugt ist die in der Pyrolyse eingesetzte Biomasse ein Klärschlamm mit einem Wasseranteil von <15 Gew.-%, insbesondere von <12 Gew.-%, der die folgenden anorganischen Bestandteilen als Elemente, bezogen auf die Trockensubstanz, beschrieben enthält:
Silizium von 1 bis 25 Gew.-%,
Phosphor von 1,5 bis 15 Gew.-%,
Eisen von 2 bis 20 Gew.-%,
Calcium von 2 bis 25 Gew.-%,
Aluminium von 0,3 bis 15 Gew.-%,
Kalium von 0 bis 8 Gew.-%,
Magnesium von 0,05 bis 4 Gew.-%,
Natrium von 0,05 bis 2 Gew.-%
Schwefel von 0 bis 5 Gew.-%,
   und
Titan von 0 bis 1 Gew.-%.

"Trockensubstanz" bedeutet im Rahmen dieser Anmeldung, dass das Material bei 120°C in einem Ofen bis zur Massekonstanz getrocknet wurde.

Dabei wird als Biomasse für die Pyrolyse, vorzugsweise Klärschlamm, bevorzugt als Formkörpern wie Extrudate oder Pellets eingesetzt.

Sofern die Biomasse einen Si-Gehalt von kleiner als 1 Gew.-% hat, kann dieser insbesondere durch Zugabe oder Mitverwendung von Klärschlamm oder Klärschlammasche mit einem Si-Gehalt von größer 1 Gew.-% erhöht werden.

### Verfahren

Bei dem erfindungsgemäßen Verfahren kann das Chlorgas auf verschiedene Weise mit der Biokohle oder ihrer Mischung mit einer weiteren Kohlenstoffquelle, vorzugsweise mit einem Kohlenstoffgehalt von größer als 20 Gew.-% wie beispielsweise einer weiteren Biokohle oder mit einer Bioasche, bevorzugt unter 1 Gew.-%, besonders bevorzugt von unter 0,1 Gew.-% in Kontakt gebracht werden.

Die Umsetzung erfolgt dabei vorzugsweise mit einem Sauerstoffgehalt von bevorzugt weniger als 0,5 Volumenprozent, insbesondere weniger als 0,3 Volumenprozent der Gasphase.

Ebenfalls ist es bevorzugt, die Umsetzung bei einem Wassergehalt von bevorzugt weniger als 0,5 Volumenprozent, insbesondere weniger als 0,3 Volumenprozent der Gasphase durchzuführen.

Vorzugsweise wird Chlor über oder durch die Biokohle, die ggf. in Form der oben beschrieben Mischung vorliegt, geleitet, wobei diese zur effektiven Umsetzung bevorzugt während der Reaktion bewegt wird. Dies kann in einem Drehrohrofen erfolgen oder in einem Schaufeltrockner, in dem die Biokohle, die ggf. in Form der oben beschrieben Mischung vorliegt, bewegt wird. Das Chlorgas kann aber auch durch die Biokohle, die ggf. in Form der oben beschrieben Mischung vorliegt, hindurchgeleitet werden, was beispielsweise in einem Wirbelbett oder Festbett erreicht werden kann. Sofern es sich bei Zusatz einer weiteren Kohlenstoffquelle um eine gasförmige Verbindung handelt, erfolgt der oben beschriebene Chlorgaseinsatz vorzugsweise zusammen oder getrennt mit der gasförmigen Kohlenstoffquelle zur Biokohle, die ggf. in Form der oben beschriebenen Mischung vorliegt.

Die Umsetzung mit Chlor erfolgt dabei vorzugsweise bei einer Temperatur von 400 bis 850°C. Die Reaktion ist vorzugsweise beendet, wenn keine Exothermie mehr in der Reaktionsmischung beobachtet wird, wenn also die Reaktorinnentemperatur und die Reaktoraußentemperatur - nach Abzug der rechnerisch durch den Gasstrom abtransportierten Wärmemenge - keine Temperaturdifferenz mehr aufweisen oder die Bildung von CO₂ beendet ist.

Die Verweilzeit im Reaktor während der Reaktion richtet sich in der Regel nach Temperatur und Kontaktmöglichkeit von Material zu Chlorgas. Dabei kann sich die Verweilzeit im Reaktor beispielsweise von einer Minute bis 5 Stunden hinziehen. Das erfindungsgemäße Verfahren kann als Batch oder kontinuierlich betrieben werden.

### Reaktor

Die nach dem erfindungsgemäßem Verfahren einzusetzende Biokohle, vorzugsweise nach Formgebung, wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Nickelbasislegierungen oder Graphit beschichtete Reaktoren, oder Reaktoren bestehend aus einer Keramik wie Siliziumcarbid oder Aluminiumoxid oder Aluminiumoxid-Siliziumdioxid-Mischkeramik. Als solche können Rohrreaktoren wie Drehrohrreaktoren oder andere Reaktoren wie Schachtöfen verwendet werden. Besonders bevorzugt sind Reaktoren, die eine Bewegung der Biokohle während der Reaktion erlauben, um eine möglichst effektive Kontaktaufnahme von Biokohle und Chlorgas zu ermöglichen. Dabei sind Wirbelbettvorrichtungen, sowie Drehrohrreaktoren oder eine Reaktion in einer Extrudervorrichtung mit Schneckenvortrieb bevorzugt. Ebenso kann ein Festbettreaktor oder ein schachtofenartiger Reaktor zum Einsatz kommen.

Vorzugsweise befindet sich an dem Reaktor ein Auslass für den Abgasstrom. In dem Abgasstrom befinden sich die gasförmigen Reaktionsprodukte, flüchtige Bestandteile der Biokohle bei der Temperatur der Chlorierung sowie ggf. überschüssiges Chlorgas, die zusammen aus dem Reaktionsraum abgeleitet werden können.

Im Falle eines Rohreaktors beträgt die Reaktorhöhe vorzugsweise 0,2 bis 40 m.

In dem Abgasstrom befinden sich neben Siliziumtetrachlorid SiCl₄ auch Phosphorchloride, insbesondere Phosphortrichlorid und Phosphoroxychlorid sowie ggf. gasförmiges Eisen(III)-chlorid, und ggf. auch AlCl₃, sofern Eisen und/oder Aluminium in der eingesetzten Biokohle enthalten waren.

Die Bildung von Siliziumtetrachlorid beginnt bei etwa 350 °C.

Zur Gewinnung von SiCl₄ aus dem Abgasstrom kann ggf. auch ein Wäscher, zum Beispiel mit einem Höhersieder wie etwa Toluol verwendet werden, der mit SiCl₄ vollständig mischbar ist, wobei SiCl₄ und der Höhersieder in einem nachfolgenden Schritt destillativ getrennt werden können.

Aus dem Abgasstrom wird vorzugsweise das bei Reaktionstemperatur gasförmige Phosphortrichlorid und das ggf. ebenfalls gebildete gasförmige Phosphoroxychlorid sowie das gasförmige Siliziumtetrachlorid mittels eines Kondensators voneinander abgetrennt. In der Regel bildet sich ein Gemisch an Phosphortrichlorid und Phosphoroxychlorid und Siliziumtetrachlorid, welches hinsichtlich seiner Komponenten weiter destillativ aufgetrennt werden kann. Dadurch sind die Phosphorkomponenten und die Siliziumkomponente in sehr reiner Form zu gewinnen.

Bevorzugt ist das erfindungsgemäße Verfahren dadurch gekennzeichnet, dass der Phosphortrichlorid enthaltende Abgasstrom oder das Phosphortrichlorid nach Separation daraus mit Chlorgas bei einer Temperatur von 20 bis 160°C zu PCl₅ umgesetzt wird. Bei dieser Umsetzung bildet sich Phosphorpentachlorid. Bevorzugt ist dafür ein molares Ch/Phosphortrichlorid-Verhältnis von 1:1 bis 10:1.

Bevorzugt ist das erfindungsgemäße Verfahren zur Wiedergewinnung von Phosphor und Silizium in Form ihrer Chlorverbindungen.

Sofern das erfindungsgemäße Verfahren ohne stöchiometrischen Chlorüberschuss betrieben wird, und sich somit wenig bis kein Chlor im Abgasstrom befindet, kann der die Chloride des Phosphors, insbesondere Phosphortrichlorid und ggf. Phosphoroxychlorid enthaltende Abgasstrom, vorzugsweise, nachdem er von möglichem Eisenchlorid befreit wurde, auch in Wasser oder in eine Lauge eingeleitet werden, um die entsprechenden Säuren des Phosphors wie Phosphorsäure und Phosphonsäuren zu erhalten, aus denen dann ggf. weitere Phosphorderivate, wie deren Ester hergestellt, werden können.

Das entstehende SiCl₄ kann, nach destillativer Aufreinigung, zum Beispiel mit Wasser zu hochreinem SiOz und Salzsäure umgesetzt werden.

Eisen(III)chlorid und auch AlCl₃, sofern Aluminium in der Klärschlammasche enthalten ist, lassen sich aus dem Abgasstrom vorzugsweise durch Resublimation an unterschiedlich kühlen Oberflächen abscheiden und voneinander trennen. Sofern das Eisenchlorid zusammen mit AlCl₃ im Abgasstrom vorhanden ist, können die jeweiligen Chloride aufgrund genügend unterschiedlicher Siedepunkte auch fraktioniert an verschiedenen Oberflächen mit unterschiedlichen Temperaturen resublimiert und dadurch sehr sauber getrennt werden.

Die gasförmigen Produkte PCl₃, POCl₃ und SiCl₄ werden an Kondensatoren kondensiert und gesammelt.

Bevorzugte Abscheidetemperaturen sind für FeCl₃ kleiner gleich 307°C, insbesondere 150°C bis 300°C und für AlCl₃ kleiner gleich 150°C, insbesondere 110°C bis 149°C.

### Bioasche + Kohlenstoff + Chlor

Die Erfindung betrifft weiterhin die Herstellung von SiCl₄, dadurch gekennzeichnet, dass man aus Bioasche, in Gegenwart einer Kohlenstoffquelle mit elementarem Chlor bei einer Temperatur von 350 bis 900°C umsetzt und das gebildete SiCl₄ aus dem Abgasstrom abtrennt.

Die Begriffe "Bioasche" und "Kohlenstoffquelle" haben dabei jeweils die oben angegebene Bedeutung, inklusive der Vorzugsbereiche.

### Bioasche

Wie bereits oben beschrieben bedeutet auch für hier eine "Bioasche" im Rahmen dieser Erfindung der Verbrennungsrückstand einer Biomasse oder Biokohle, vorzugsweise mit einem Kohlenstoffgehalt von bevorzugt unter 3 Gew.-%, insbesondere unter 1 Gew.-%, besonders bevorzugt von unter 0,1 Gew.-%.

Als bevorzugte Bioasche ist Klärschlammasche zu nennen, also die Asche, die aus der Verbrennung von Klärschlamm stammt. Diese kann sowohl bei der Klärschlammverbrennung als auch bei der Klärschlammvergasung zur Erzeugung eines Brenngases erhalten werden. Die Klärschlammasche enthält neben Phosphorverbindungen vorzugsweise Verbindungen von Eisen (Fe), Aluminium (Al), Kalzium (Ca) und Silizium (Si).

Vorzugsweise weist die in dem erfindungsgemäßen Verfahren eingesetzte Klärschlammasche einen Phosphorgehalt, ausgedrückt in Gewichtsprozenten an elementarem Phosphor in der Asche, von wenigstens 3 %, vorzugsweise von 3 bis 29 Gew.-%, insbesondere von 3 bis 15 Gew.-% auf.

Vorzugsweise weist die in dem erfindungsgemäßen Verfahren eingesetzte Bioasche, insbesondere Klärschlammasche einen Siliziumgehalt, ausgedrückt in Gewichtsprozenten an elementarem Silizium in der Asche, von wenigstens 1 %, vorzugsweise von 3 bis 30 Gew.-%, insbesondere von 3 bis 20 Gew.-% auf.

Die Klärschlammasche enthält bevorzugt einen Anteil an Eisenverbindungen von 5 bis 21 Gew.-% (gerechnet als elementares Eisen), sowie vorzugsweise einen Anteil an Calciumverbindungen von 4 bis 38 Gew.-% (gerechnet als elementares Calcium). Die bevorzugte Zusammensetzung einer Klärschlammasche enthält, gerechnet auf das jeweilige Element, vorzugsweise zudem:
Aluminium von 0,7 bis 20 Gew.-%,
Kalium von 0 bis 2 Gew.-%,
Magnesium von 0,1 bis 4 Gew.-%,
Natrium von 0,1 bis 4 Gew.-%
Schwefel von 0 bis 7 Gew.-%,
   und
Titan von 0 bis 2 Gew.-%.

Die Elemente machen zusammen, gerechnet als Oxide, vorzugsweise mehr als 70 Gew.-% der Klärschlammasche aus.

Die genaue strukturelle Zusammensetzung der Klärschlammasche lässt sich mit den üblichen, dem Fachmann zur Verfügung stehenden Analysemethoden wie Röntgendiffraktrometrie (XRD) nicht aufklären, da das Diffraktogramm ausschließlich Reflexe für das vorhandene SiOz zeigt.

Bevorzugt beträgt der Kohlenstoffgehalt in der Bioasche, insbesondere in der Klärschlammasche, weniger als 3 Gew-%, insbesondere weniger als 1 Gew.-%, besonders bevorzugt weniger als 0,1 Gew.-%.

### Kohlenstoffquelle

Als Kohlenstoffquelle bzw. weitere Kohlenstoffquelle können grundsätzlich alle Modifikationen des Kohlenstoffes wie etwa Graphit, Ruß, Kohle, Koks, Aktivkohle, aber auch kohlenstoffhaltige Gase wie Kohlenmonoxid, Methan oder Phosgen genannt werden, aber auch flüssige Materialien wie Polyethylenglykol oder verschiedene Öle oder feste Materialen wie Bioabfälle oder Klärschlamm. Klärschlamm ist besonders bevorzugt. Dieser enthält vorzugsweise Kohlenstoff zu einem Anteil von wenigstens 5 Gew.-%, vorzugsweise von 20 bis 50 Gew.-%, bezogen auf die Trockenmasse.

Vorzugsweise enthält der Klärschlamm einen Kohlenstoffgehalt, ausgedrückt in Gew.-% an elementarem Kohlenstoff, von wenigstens 5 Gew.-% Kohlenstoff. In einer bevorzugten Ausführungsform ist die Flüssigkeit, in der die Partikel des Klärschlamms suspendiert sind, Abwasser wie hierin definiert. Unter dem Begriff "Abwasser" werden alle Flüssigkeiten wässriger und/oder organischer Natur bzw. deren Gemische verstanden, die keine Trinkwasserqualität im Sinne der Trinkwassernormen haben.

In einer besonderen Ausführungsform liegt der Klärschlamm bevorzugt als Primärschlamm, Rohschlamm, Überschussschlamm, als behandelter und/oder stabilisierter Klärschlamm (aerob/anaerob) vor.

Unter dem Begriff "Bioabfälle" versteht man alle organischen Abfälle tierischen oder pflanzlichen Ursprungs, die in einem Haushalt oder einer Fabrik anfallen und durch Mikroorganismen, boden-lebende Organismen oder Enzyme abgebaut werden können. Als solche können beispielsweise genannt werden Stroh, Sägemehl, Wachse, Fette sowie Vogelkot.

Die Kohlenstoffquelle kann dabei fest, flüssig oder gasförmig sein. Bevorzugt ist der Einsatz einer festen Kohlenstoffquelle.

Sollte der Kohlenstoffanteil in der Kohlenstoffquelle bei kleiner als 70 Gew.-% liegen, wird vorzugsweise vor der Umsetzung mit Chlorgas eine Pyrolyse durchgeführt. Diese wird vorzugsweise unter Inertgas wie Stickstoff bei Temperaturen von 250 bis 800°C, bevorzugt bei 350 bis 550°C durchgeführt, bis die Gasbildung von flüchtigen Komponenten weniger als 1l/1kg eingesetzte Kohlenstoffquelle / Stunde beträgt.

Besonders bevorzugt wird als Kohlenstoffquelle Klärschlamm eingesetzt.

Bevorzugt beträgt der Chloridgehalt in der Kohlenstoffquelle, insbesondere bezogen auf sein Trockengewicht, weniger als 1 Gew.-%.

### Mischungsverhältnisse

Das Verhältnis der Gewichtsanteile des Kohlenstoffs der Kohlenstoffquelle zu Bioasche, insbesondere zu Klärschlammasche ist vorzugsweise größer als 0,01, bevorzugt von 0,04 bis 0,5.

### Verfahren/Reaktor

Die Umsetzung der Bioasche mit der Kohlenstoffquelle und Chlor erfolgt dabei wie unter den Ausführungen des obigen "Verfahrens" beschrieben, wobei statt Biokohle Bioasche und die Kohlenstoffquelle eingesetzt gelesen werden. Dies gilt auch für die jeweiligen bevorzugten Ausführungsformen. Gleiches gilt für den für das Verfahren bevorzugt eingesetzten Reaktor.

Die Erfindung betrifft weiterhin die Verwendung von Biokohle und/oder Bioasche, insbesondere Klärschlammasche zur Herstellung von SiCl₄ durch Chlorierung in Gegenwart einer Kohlenstoffquelle. Im Falle der Biokohle kann diese die Kohlenstoffquelle bereits beinhalten. Bevorzugt erfolgt die Chlorierung mit elementarem Chlor bei einer Temperatur von 350 bis 900°C, wobei das gebildete SiCl₄ aus dem Abgasstrom abtrennt wird, wie vorzugsweise oben beschrieben.

### Analytik

Angegebene Gewichtsprozente wurden durch eine ICP-OES Messung ermittelt. Dazu wird eine gewogene Menge der Feststoffes zunächst in einer bekannten Menge einer Säure gelöst, die Konzentration der angegebenen Elemente in einem ICP gegen eine Kalibriermessung ermittelt und aus dieser auf den Feststoff als Anteil zurückgerechnet.

Kohlenstoffanalysen wurden mit einem speziellen Kohlenstoffanalysengerät Typ G4 ICARUS HF durchgeführt.

Die Analytik auf Phosphor- und Siliziumverbindungen, insbesondere POCl₃, PCl₃ und SiCl₄ in der Flüssigphase wird bevorzugt mittels eines GC Verfahrens durchgeführt. Eingesetzt wird ein Gerät von Agilent Technologies der Baureihe 7890A. Als Detektoren werden ein WLD und ein FID respektive ein QMS verwendet. Als Injektionssystem wird ein MPS von Gerstel verwendet. Verbaut ist eine Säule vom Typ HP5 mit den folgenden Maßen: Länge = 30m, Innendurchmesser = 320 µm und mit einer Filmdicke von 0,25µm.

Zur Bestimmung der Identitäten der erhaltenen Flüssigkeiten wird zusätzlich ein GC-MS eingesetzt und die erhaltenen Massenspektren mit denen in Datenbanken abgeglichen.

Der Wassergehalt wird über eine Infrarot-Trocknungswaage bestimmt.

### Beispiel 1

### a) Trocknung

Als Biomasse werden 8 kg eines Klärschlamms (erhalten von der Kläranlage Wuppertal, in Gew.-% als jeweilige Elemente):
Al: 0,86, Ca: 0,98, Fe: 0,8, K: 0,09, Cu: 0,01, Mg: 0,14, Mn 0,01 P: 0,91, Si: 2,33, Zn: 0,03, S: 0,16 Gew.-% und andere Elemente im Spurenbereich.

Der Klärschlamm mit einem Wassergehalt von 77% wird auf Edelstahlblechen verteilt und in einem Trockenschrank bei bis zu 180°C über fünf Tage im Vakuum bei 20 mbar getrocknet. Dabei wurde ein bröckeliger Klärschlamm mit einem Wassergehalt kleiner <1% erhalten.

### b) Pyrolyse

1146 g des getrockneten Klärschlamms nach Beispiel 1a) wurde in ein senkrecht stehendes Quarzglasrohr mit einem Innendurchmesser von 80mm eingefüllt, das in einen senkrechten Ofen eingebaut wurde.

In einem Strom von 30 L/h gereinigtem und getrocknetem Stickstoff (N₂ Gehalt > 99%, Wassergehalt < 0,05%) wurde der Ofen innerhalb von zwei Stunden auf 500°C aufgeheizt und bei dieser Temperatur belassen (Pyrolyseschritt). Entstehende, bei der Temperatur flüchtige Produkte wurden über einen Wäscher (Wasser) abgeleitet. Die Pyrolyse erfolgte fünf Stunden unter diesen Bedingungen, bis keine flüchtigen Produkte mehr erkennbar waren (<1 I /kg gasförmiger Produkte pro Stunde und pro Kilogramm eingesetztem, getrocknetem Klärschlamm). Dann wurde der Pyrolyserückstand, die Biokohle, auf Raumtemperatur abgekühlt.

Die erhaltene Biokohle weist den stärksten Reflex bei einem 2θ-Wert (λ(Kα) =1,540 Å) bei 26.3° auf und enthielt (in Gew.-% als Element):
Al: 5,6, Ca: 6,3, Fe: 5,2, K: 0,58, Cu: 0,079, Mg: 0,92, Mn 0,061, P: 5,97, Si: 15,2, Zn: 0,21, C: 21,2 Gew-%, S: 1,07 Gew.-% und andere Elemente im Spurenbereich.

### c) Carbochlorierung

Die nach Beispiel 1 b) erhaltene Biokohle (761g, schwarz) wurde als Schüttung in das gereinigte, stehende Quarzrohr aus dem Pyrolyseschritt b) unter Durchströmen mit Stickstoff (30 L/h) auf 780°C erwärmt.

Nach Erreichen der Temperatur werden zusätzlich zu den 30 L/h Stickstoff 12 Uh Chlor hinzudosiert, das ebenfalls die Probe durchströmte. Der Stickstoffstrom ist nicht zwingend notwendig. Die Reaktion wurde für insgesamt elf Stunden unter diesen Bedingungen durchgeführt.

An den bei Raumtemperatur gehaltenen Glasflächen am Ausgang des Reaktors bildete sich ein rot-brauner Niederschlag (33g). Es bildete sich außerdem ein Kondensat (34g), das die beiden Hauptbestandteile SiCl₄ und PCl₃ in einem Gewichtsverhältnis von 2/3 zu 1/3 enthielt. Das Kondensat wurde über eine Destillation in die beiden Hauptbestandteile getrennt.

Als Rückstand der Chlorierung verbleibt ein grauer Feststoff (646g), der im Wesentlichen aus löslichen Erdalkalichloriden und löslichen Schwermetallchloriden besteht. Der Feststoff wird in Wasser suspendiert und filtriert. Der Rückstand kann durch Fortsetzung der Reaktion mit weitere Umsetzung mit Chlor zur weiteren Rückgewinnung von Silizium- und PhosphorChloriden verwendet werden.

### Beispiel 2:

### a) Trocknung und Pyrolyse

200g Klärschlammasche einer Klärschlammverbrennungsanlage mit den bestimmten Inhaltsstoffen (enthaltend bei einem C-Gehalt von < 1 Gew.-%: Silizium 18,0 Gew.-%, Calcium 9,1 Gew.-%, Eisen 6,5 Gew.-%, 7,4 Gew.-% Phosphor, 7,0 Gew.-% Aluminium, 793 ppm Kupfer, 0,36 % Kalium, 1,2% Magnesium, 879 ppm Mangan, jeweils gerechnet als Elemente; Farbe: Rot) werden mit 133g Klärschlamm (45% Feststoffgehalt, 30% Kohlenstoffgehalt im Trockenrückstand) gemischt und in einem Quarzglasrohr, das in einen elektrischen Ofen eingelegt ist, unter Luftausschluss in einem Stickstoffgasstrom von 1l/min auf 500°C erhitzt und für eine Stunde auf dieser Temperatur gehalten, bis keine gasförmigen Produkte mehr gebildet werden. Die Abluft wird durch einen Wäscher geleitet und entsorgt. Das erhaltene Gemisch (Farbe: Schwarz) wird nach dem Abkühlen zerkleinert und homogenisiert.

### b) Carbochlorierung

60g des oben erzeugten Gemisches (gemessener Gesamt-Kohlenstoffgehalt: 10,2 Gew.-%, Calcium 7,5 Gew.-%, Silizium 16,2 Gew.-%, Eisen 9,7 Gew.-%, Phosphor 6,6 Gew.-%, Aluminium 6,1 Gew.-%, Magnesium 1,1 Gew.-%, Chlor: <0,1 Gew.-%) werden wieder in das Quarzglasrohr eingelegt, auf 780°C erhitzt und bei dieser Temperatur gehalten. Dann wird ein Strom von 100ml/min Chlorgas (Reinheit 99,8%) über das Gemisch geleitet. Entstandenes FeCl₃- enthaltendes Produkt wird an einem Kühler bei einer Temperatur von 200°C resublimiert. Der bei dieser Temperatur gasförmige Produktgasstrom wird in unregelmäßigen Zeitabständen in einem Gasphasen-Infrarotspektrometer analysiert und dann über Kühlfalle und Wäscher entsorgt.

Nach einiger Zeit erscheint im IR-Spektrum der Gasphase, neben Banden für CO₂ und anderen, eine Adsorptionsbande bei 501 cm⁻¹, die PCl₃ zugeordnet werden kann.

Die bei weitem größte Bande entsteht bei 617cm⁻¹, bei dem es sich um eine Siliziumtetrachlorid- Bande handelt. Auf die Isolation des Siliziumtetrachlorids wurde verzichtet und der Gasstrom wird direkt in einen mit Natronlauge betriebenen Wäscher geleitet, in dem der weiße Niederschlag einer Kieselsäure entsteht.

Nach etwa drei Stunden Reaktionszeit gehen die Intensitäten aller im IR beobachteten Banden zurück und die Reaktion ist beendet.

Der Chlorgasstrom wird abgeschaltet und durch einen Stickstoffstrom ersetzt. Den Reaktor lässt man unter diesen Bedingungen auf Raumtemperatur abkühlen und das Reaktionsgemisch (43,9g, Farbe: Weißgrau, C-Gehalt: 2 Gew.-%) wird entnommen. Der im Reaktorrohr zurückbleibende Rückstand ist teilweise wasserlöslich. Bei der erhaltenen Lösung handelt es sich um eine schwermetallhaltige wässrige Calcium- und Magnesiumchloridlösung, die durch dem Fachmann bekannte Verfahren wie lonenaustauscherharze von eventuell vorhandenen Schwermetallspuren getrennt werden kann.

### Beispiel 3

160g Klärschlammasche einer Klärschlammverbrennungsanlage (enthaltend bei einem C-Gehalt von <1 Gew.-% Silizium 18,0 Gew.-%, Calcium 9,1 Gew.-%, Eisen 6,5 Gew.-%, 7,4 Gew.-% Phosphor, 7,0 Gew.-% Aluminium, 793 ppm Kupfer, 0,36 % Kalium, 1,2% Magnesium, 879 ppm Mangan, jeweils gerechnet als Elemente; Farbe: Rot) werden mit 40 g Aktivkohle gemischt und in einem Quarzglasrohr, das in einen elektrischen Ofen eingelegt ist, unter Luftausschluss in einem Stickstoffgasstrom von 1l/min auf 780°C erhitzt. Der Abgasstrom wird über ein IR-Spektrometer überwacht.

Dann wird der Stickstoffstrom durch einen Strom von 200ml/min Chlorgas (Reinheit 99,8%) ersetzt und für 14 Stunden bei 780°C über das Gemisch geleitet.

Im IR-Spektrometer wird eine starke Bande bei 617 cm⁻¹ sichtbar, die sicher SiCl₄ zugeordnet werden kann. Der bei dieser Temperatur gasförmige Produktgasstrom wird nicht isoliert, sondern über Kühlfalle und Wäscher entsorgt. Im Wäscher fällt Kieselsäure als Hydrolyseprodukt des SiCl₄ aus.

## Patentansprüche

1. Verfahren zur Rückgewinnung von Silizium in Form des Tetrachlorides, in dem man Biokohle mit einem Siliziumgehalt, ausgedrückt in Gew.-% an elementarem Silizium, von wenigstens 1 Gew.-% mit elementarem Chlor bei einer Temperatur von 350 bis 900°C umsetzt und das gebildete Siliziumtetrachlorid aus dem Abgasstrom, vorzugsweise durch Kondensation, abtrennt.

2. Verfahren gemäß Anspruch 1, **dadurch gekennzeichnet, dass** die Biokohle einen Siliziumgehalt, ausgedrückt in Gew.-% an elementarem Silizium von wenigstens 5 Gew.-%, vorzugsweise von 5 bis 40 Gew.-%, besonders bevorzugt von 7 bis 30 Gew.-%, besitzt.

3. Verfahren gemäß Anspruch 1, **dadurch gekennzeichnet, dass** die Umsetzung mit elementarem Chlor bei einer Temperatur von 400 bis 850°C, besonders bevorzugt von 500°C bis 800°C erfolgt.

4. Verfahren gemäß Anspruch 1, **dadurch gekennzeichnet, dass** die Biokohle einen Phosphorgehalt, ausgedrückt in Gew.-% an elementarem Phosphor, von wenigstens 2 bis 19 Gew.-%, insbesondere von 5 bis 16 Gew.-% besitzt.

5. Verfahren nach wenigstens einem der Ansprüche 1 bis 4 **dadurch gekennzeichnet, dass** die Biokohle einen Gehalt an Eisen von 3 bis 14 Gew.-% und an Aluminium von 0,4 bis 13 Gew.-%, jeweils ausgedrückt in Gew.-%, als Elemente aufweist.

6. Verfahren gemäß Anspruch 1, **dadurch gekennzeichnet, dass** die Biokohle der Pyrolyserückstand einer Biomasse, insbesondere eines Klärschlamms, vorzugsweise mit einem Wassergehalt von kleiner 15 Gew.-%, insbesondere von kleiner 12 Gew.-%, bevorzugt < 8 Gew.-%, besonders bevorzugt von 0,5 bis 7 Gew.-% ist, die durch Erhitzen der Biomasse in einer sauerstoffarmen Atmosphäre bei Temperaturen von 250 bis 800°C erhalten wurde.

7. Verfahren gemäß Anspruch 4 zur Rückgewinnung von Phosphorchloriden, in dem man die gebildeten Phosphor- und Siliziumchloride aus dem Abgasstrom abtrennt.

8. Verfahren nach wenigstens einem der Ansprüche 1 bis 7, **dadurch gekennzeichnet, dass** aus dem Abgasstrom gebildete Phosphorchloride, insbesondere Phosphoroxychlorid und Phosphortrichlorid und/oder Phosphorpentachlorid und/oder Siliziumtetrachlorid durch Kondensation abgeschieden werden.

9. Verfahren nach wenigstens einem der Ansprüche 1 bis 8, **dadurch gekennzeichnet, dass** man den Rückstand der Chlorierung von unlöslichen Bestandteilen mit Wasser abtrennt.

10. Verfahren zur Herstellung von SiCl₄, **dadurch gekennzeichnet, dass** man Bioasche, in Gegenwart einer Kohlenstoffquelle mit elementarem Chlor bei einer Temperatur von 350 bis 900°C umsetzt und das gebildete SiCl₄ aus dem Abgasstrom abtrennt.

11. Verwendung von Biokohle und/oder Bioasche, insbesondere Klärschlammasche zur Herstellung von SiCl₄ durch Chlorierung in Gegenwart einer Kohlenstoffquelle.
